# EUROPEAN PATENT SPECIFICATION

(11) **EP 2 085 130 B1**
(45) Date of publication and mention of the grant of the patent: **12.03.2014**
(21) Application number: 09151587.4
(22) Date of filing: 29.01.2009
(51) Int. Cl.: B01D 35/30

(54) **Retaining Device**
Rückhaltevorrichtung
Dispositif de rétention

(30) Priority: 04.02.2008 GB 0801994
(43) Date of publication of application: 05.08.2009
(73) Proprietor: Nissan Motor Iberica SA, 08040 Barcelona (ES)
(72) Inventor: De Pablo, Jose, 08040 Barcelona (ES); Domiguez, Jordi, 08040 Barcelona (ES)
(74) Representative: Holmes, Matthew William

(56) References cited:
- EP-A- 0 649 673
- DE-A1-102004 059 652
- US-A- 5 013 182

## Description

The present invention relates to a retaining device and particularly, but not exclusively, to a retaining device for retaining a cylindrical object such as an in-line fuel filter or the like which may be used in a motor vehicle. Aspects of the invention relate to a device, to an apparatus and to a vehicle.

It is well known to secure an in-line fuel filter onto a rigid mounting body by means of a mounting clamp. The mounting clamp is typically of an omega clamp or band clamp design which secures the filter by gripping it with a band that may be tightened around the circumference of the body of the filter. Such clamps are susceptible to a number of problems, for example uneven clamping pressure exerted on the object to be secured and the need for threaded fasteners such as a screw to provide the necessary clamping force.

The gripping bands of such clamps tend to distort during clamping and become less circular in section. In the case of some in-line filters, such distortion of the clamp band may result in distortion of the filter itself caused by the uneven pressure applied by the band to the filter body. Where the in-line filter needs to be inspected and/or replaced regularly, the use of a threaded fastener such as a screw to tighten the mounting clamp band around the filter can present the user with additional problems. For assembly or service of new vehicles, the tightening of the clamping screw is merely time consuming and requires care that the user does not inadvertently under- or over-tighten the screw and thus the band around the filter.

The size of the filter body itself may vary from one unit to another due to manufacturing tolerances; in this case the user must take care to correctly adjust the clamp band to fit the actual filter being used rather than return to the same band setting used for the previous filter. In extreme conditions this may require the user to perform a torque check on the clamping screw. During service of older vehicles, such clamping screws suffer deterioration due to corrosion as the mounting clamp and in-line filter are often positioned under the vehicle or in another position exposed to water and salt spray etc. When dealing with a corroded mounting clamp, the user must take care not to damage the head of the clamping screw in order to remove the existing filter and is often forced to replace the mounting bracket altogether. This greatly adds to the time necessary to inspect and replace the filter during the regular service procedure.

Typical means for securing an in-line filter to a vehicle such as omega or band clamps are commonly made from steel or other suitable metal. Mounting a metallic clamp or bracket to a vehicle body creates the potential for corrosion of both the clamp and the vehicle body. In some cases the in-line filter itself may be of a metallic construction which, if of a different material to the clamp, may give rise to dissimilar metal corrosion. When vehicle components suffer corrosion they often become less reliable and more difficult to replace, increasing service time and cost.

EP 0 649 673A2 discloses a fuel filter which is fixed into a fixing apparatus by press fitting the filter into a heated fixing ring, and allowing the ring to cool. The filter is therefore securely fixed into the fixing ring, and both parts will need to be changed when the vehicle is serviced.

US 5,013, 182 discloses a self-adjusting mounting-band assembly for a vehicle air filter. Both band 5 and spring 25 are made of metal, so they are liable to corrosion in service. Furthermore, band 5 does not contain any features designed to assist alignment of the filter into the band.

Common clamp designs such as omega and band clamps are bi-directional in that they are capable of receiving and securing an object such as an in-line filter in both forward (correct) and reverse (incorrect) orientations. This presents the potential for an in-line filter to be incorrectly installed which may adversely affect the performance of the filter and other components or systems of the vehicle.

It is against this background that the present invention seeks to address one or more of these problems and to improve upon known technology. Embodiments of the invention may provide a simple, light weight alternative to the mounting clamps currently available. Other aims and advantages of the invention will become apparent from the following description, claims and drawings.

According to one aspect of the invention there is provided an apparatus for releasably securing an in-line filter to a vehicle, the apparatus comprising a generally annular retaining band defining an aperture arranged to receive said in-line filter; the retaining band comprises insertion guides arranged to guide insertion of the in-line filter into the aperture, to grip the in-line filter, the retaining band is formed from a single injection moulded part and is continuous around its circumference and said insertion guides are arranged to contact the outer circumference of the main body of the in-line filter, characterised in that the retaining band has arch springs comprising outwardly stepped portions of the retaining band, the arch springs arranged to expand radially outwardly so as to accommodate the filter and provide a substantially evenly distributed retention force to grip the filter. In one embodiment, the retaining band comprises retention means for retaining the filter within the insertion aperture formed by the retaining band.

In one embodiment, the retaining band comprises means for allowing insertion of the filter into the aperture from one direction and for preventing insertion of the filter into the aperture in the opposite direction.

The present invention increases the functionality of known mounting clamps described above by providing a simple lightweight retainer that is easy to install correctly to the vehicle with features that guide the user to correctly insert the in-line filter into the retainer.

The invention may provide the following additional advantages:

The invention evenly distributes the clamping force around the periphery of the in-line filter via a retaining band.

The present invention is formed from a plastics material and so is not susceptible to corrosion or likely to play a part in dissimilar metal corrosion of either the filter or the vehicle body. This resistance to corrosion greatly improves reliability and service life. The present invention is formed from a single injection moulded part which provides the benefit of reduced parts complexity and greatly reduced possibility of component failure or loss between or during service intervals.

The present invention is provided with an assembly aid to prevent the user from incorrectly installing the retaining device to the vehicle.

The present invention is provided with a retention-latch configured to provide the user with a clear audible indication when the filter has been correctly installed.

The present invention is provided with arch-springs and insertion-guides strategically positioned around the retaining-band to accommodate the variation in external dimensions of the filter caused by manufacturing tolerances.

It will be understood by one skilled in the art that the shape, size, number and positioning of the guide and spring features may be adjusted to suit the nature of the object to be retained by the retaining device.

Within the scope of this application it is envisaged that the various aspects, embodiments, examples, features and alternatives set out in the preceding paragraphs, in the claims and in the following description and drawings may be taken individually or in any suitable combination.

The present invention will now be described, by way of example only, to the accompanying drawings in which:
Figure 1 is a perspective view of a retaining device of one embodiment of the present invention;
Figure 2 is a side view of the device of Figure 1;
Figure 3 is an end view of the device of Figure 1;
Figure 4 is a plan view of the device of Figure 1;
Figure 5 is an above perspective view of the present invention in use.
Figure 6a is a detailed side view of an in-line filter; and
Figure 6b is an exploded view of the retaining device and in-line filter prior to assembly to the vehicle.

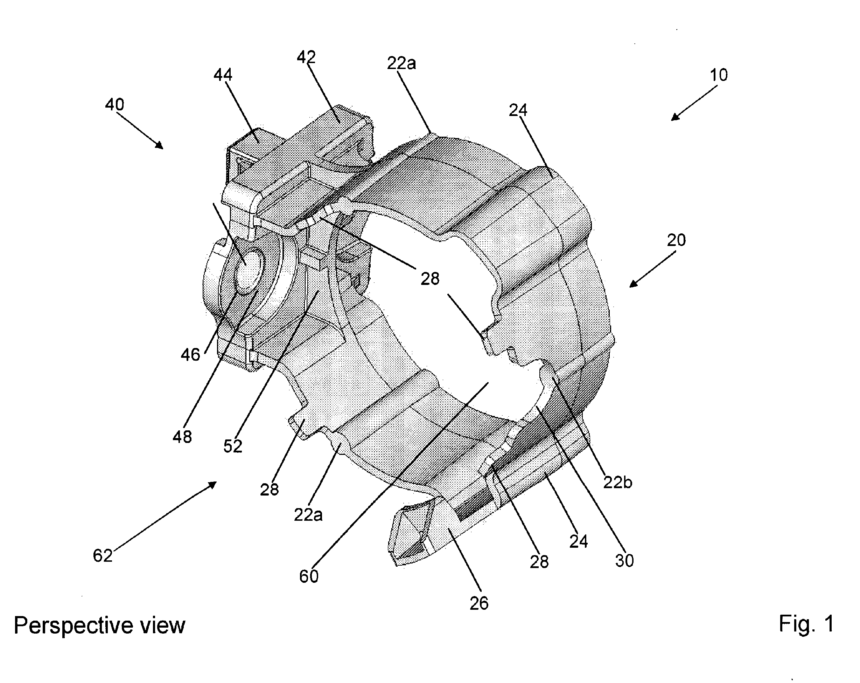

Figure 1 shows a perspective view of a retaining device 10 according to an embodiment of the invention. The device 10 is adapted to receive and support a cylindrical object such as a standard in-line fuel filter, common in the motor industry. Such filters usually comprise a main body which is generally cylindrical having a fuel port at each end. An end cap is fitted to one end of the filter having a diameter that is greater than the main body of the filter such that a radially outwardly directed rim or lip is formed at one end of the main body.

The retaining device 10 comprises retaining means in the form of a generally annular retaining band 20 defining an insertion aperture 60 for receiving the filter. The device 10 additionally comprises fixing means in the form of a fixing module 40 for securing the device 10 to the vehicle which, in the illustrated embodiment, is integrally formed with the retaining band 20.

The retaining band 20 is provided with several features designed to provide an evenly distributed retention force to the filter, limit insertion depth and prevent incorrect insertion of the filter into the retaining device 10.

For example, a degree of flexibility in the circumferential direction of the retaining band 20 is provided by spring means in the form of arch springs 24 comprising outwardly stepped portions of the retaining band which permit the insertion aperture to expand by a small amount radially outwardly so as to accommodate the filter. In the example shown in the Figures, the retaining device 10 is provided with two such arch springs 24 which are substantially equiangular spaced with the fixing module 40 about the circumference of the retaining band 20. However, the number and position of the arch springs may be varied as required. The above-described flexibility provided by the arch springs 24 not only ensures that an evenly distributed clamping force is applied around circumference of the filter but also helps to accommodate any dimensional tolerances between different filters to reduce or substantially eliminate rattles or localized pinch points between the retaining band 20 and the filter.

The retaining band 20 also comprises gripping means in the form of a plurality of insertion guides 22, each comprising a ridge protruding radially inwardly into the insertion aperture 60 from the inner surface of the retaining band 20. In the illustrated embodiment, the device comprises three insertion guides 22 which are substantially equiangularly spaced around the circumference of the retaining band 20 and extend across the width of the band parallel to the direction of insertion 62.

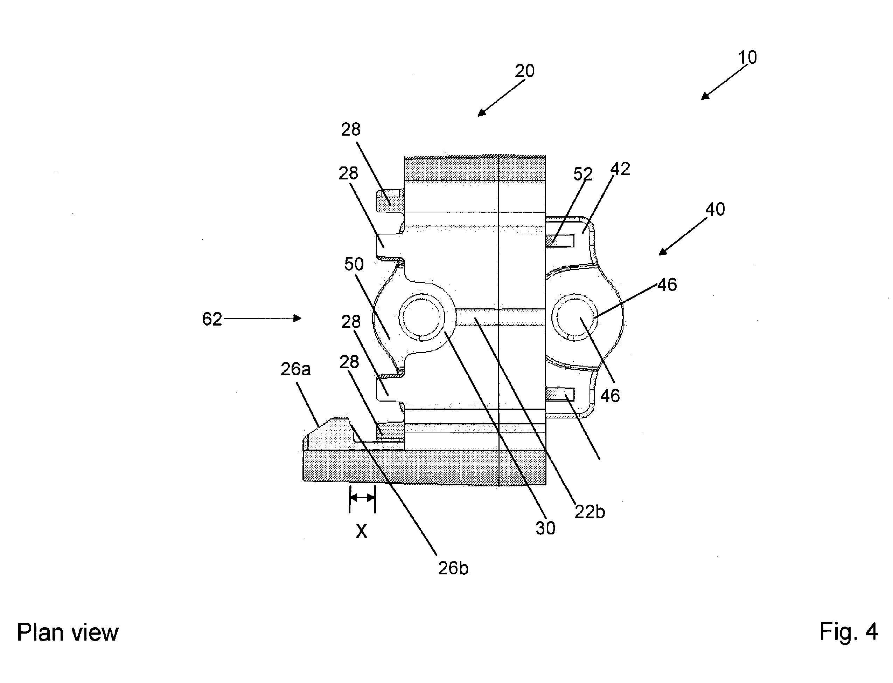

Retention means in the form of a retention latch 26 is formed integrally with the retaining band 20. As shown in Figure 4, the retention latch extends from the outer surface of one of the arch springs 24 in the retainer band 20 in the direction of insertion of the filter and comprises a resilient arm having a latch portion at the free end thereof.

The latch portion of the retaining latch comprises a leading edge ramp 26a which is inclined to the arm at a relatively shallow angle. The shallow angle of the leading edge ramp 26a keeps insertion force to a minimum for the user. The trailing edge of the retaining latch 26 has a trailing edge ramp 26b which is substantially orthogonal to the arm and hence to the direction of insertion of the filter in the insertion aperture 60. The steep angle urges the filter body home to the latched position and tends to bring the retaining latch down quickly causing a "snap" sound that indicates to the user that the filter has been correctly installed.

The gap between the top of the inner surface of the arch spring and the inner face of the retaining band 20 is greater than the difference in radius between the lip created by the end-cap and the main body of the filter. By extending the retention latch from the top of the arch-spring, sufficient clearance is provided for the end-cap lip to allow the retention latch to securely latch behind the trailing face of the end-cap lip without interference. When the retaining latch is secured behind the trailing face of the end-cap lip the retaining latch returns to its unstressed position, this keeps wear on the retaining device 10 to a minimum.

The fixing module 40 comprises a generally rectangular base plate 42 having two mounting holes 46 for threaded fasteners by which the device may be mounted to the vehicle. Each mounting hole 46 is countersunk to ensure that the threaded fasteners do not contact with the body of the filter. To prevent accidental damage by over-tightening of the threaded fasteners during assembly, the mounting holes 46 are provided with mounting hole reinforcements 48. The mounting hole reinforcements comprise metal sleeves 48 inserted in the moulding tool and over-moulded during manufacture. The threaded fastener compresses the metal sleeve during tightening rather than applying a compressive load to the plastic base plate 42.

As shown in Figure 1, a cut-out 30 is provided in the retaining band 20 to provide tool access to the threaded fasteners that secure the retaining device 10 to the vehicle.

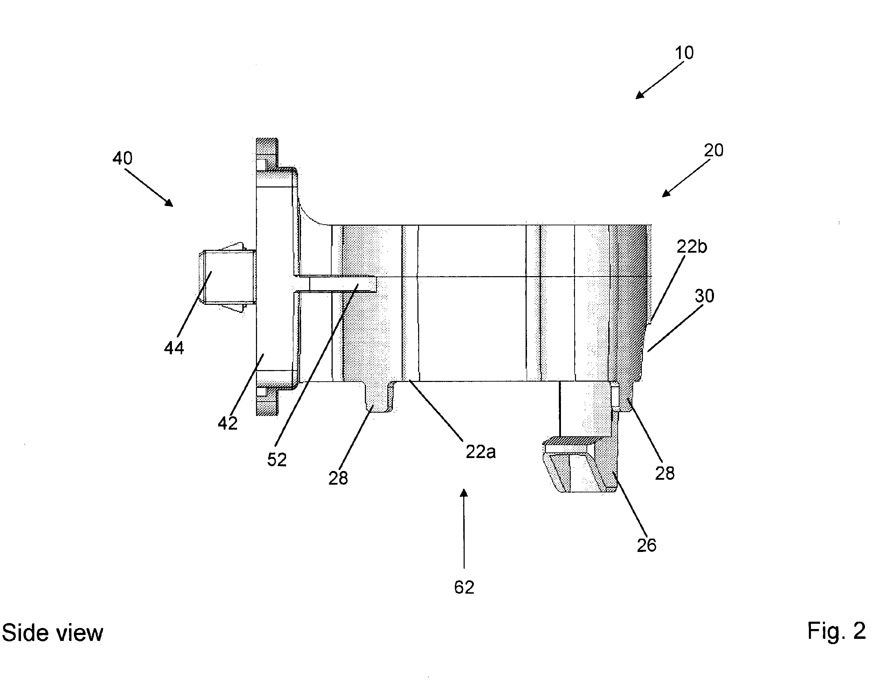

As shown in Figure 2, an assembly aid 44, comprising an upstanding portion 44, is provided on a surface of the fixing module 40 opposite to that of the retaining band 20. The assembly aid 44 extends perpendicularly from the base plate 42 and is arranged to be inserted in a corresponding recess on the vehicle for providing temporary support to the retaining device 10 during attachment to the vehicle. The assembly aid is offset from the centreline of the base plate 42 to ensure that the device is mounted in the correct orientation on the vehicle. Such a feature is commonly termed a "poka-yoke" feature.

The assembly aid 44 may also be provided with additional features such as barbs which allow the user to place the retaining device 10 in the correct location and for the retaining device to remain in place. This allows the operator to use both hands when applying the threaded fasteners. The threaded fasteners provide sufficient anchorage strength to support the retaining device and filter assembly in use.

The retaining band 20 and fixing module 40 are integrally formed by a single moulding operation, the retaining band 20 being connected to the fixing module 40 by a strengthening web 52. By varying the size and thickness of the strengthening web 52 the centreline of the retaining band 20 may be positioned relative to the fixing module 40 as required.

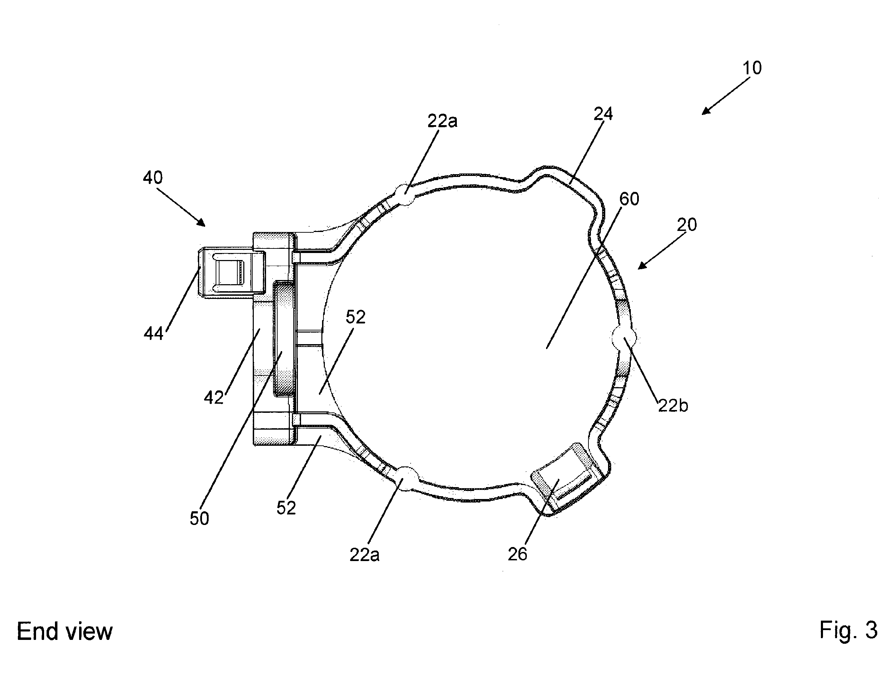

Figure 3 shows the strengthening web 52 in more detail. The strengthening web extends perpendicular to the fixing module 40 to support the retaining band 20. The strengthening band 52 extends from the fixing module 40 in two planes, parallel with and perpendicular to the direction of insertion 62. The design of the strengthening web 52 must be sufficiently rigid to resist the filter insertion and extraction forces exerted on the retaining device 10 by the user during assembly and service procedures.

Figure 3 also shows the relative positions of the insertion guides 22 in more detail. It may be seen that the first and second stage insertion guides adjacent to the retention latch 26 are of the same thickness whereas the second of the first stage insertion guides is thinner than the other two. The thinner insertion guide is positioned opposite the retention latch 26. Reducing the thickness of this insertion guide reduces the effort required by the user to fully insert the filter. As the retention latch lifts over the lip of the end-cap the filter may momentarily be deflected away from the retention latch slightly towards the thinner insertion guide. Once the retention latch has moved to a position behind the trailing edge of the end-cap lip the natural tendency of the filter body is to return to a position of equal force between the insertion guides which centre the filter in the retaining band 20.

Figure 4 also shows dimension X. Dimension X relates to a gap created between the leading edge of the limit guides 28 and the trailing edge 26b of the retaining latch 26. Dimension X is designed to be large enough to accommodate the thickness of the end-cap lip but no larger than the largest dimension expected to arise from manufacturing tolerance of the filter. If dimension X is too large then the filter has the potential to slide back and forth within the retaining device 10 potentially leading to wear. If dimension X is too small the retaining latch 26 will not fully close and the audible indication that the filter has been correctly installed would be greatly diminished or even prevented altogether.

Figure 4 shows a cut-out feature 30 in the retaining band 20 opposite the fixing module 40. Such a cut-out is only needed where tool access to the threaded fasteners is obstructed by the retaining band 20. If packaging space permits the fixing module 40 may be extended beyond the retaining band 20 to reveal the head of the threaded fastener and the cut-out feature may be deleted. If necessary cut-out features may be provided in the retaining band 20 to provide tool access for each threaded fastener.

Installation and operation of the device will now be described.

Firstly, the user offers the device up to the vehicle, inserting the upstanding assembly aid 44 into the corresponding recess on the vehicle. As described above, the offset positioning of the assembly aid relative to the centreline of the fixing module means clearly indicates the correct orientation of the device relative to the vehicle since, in the correct orientation, the mounting holes 46 in the fixing module align with corresponding threaded bores in the underside of the vehicle. This significantly reduces the likelihood of reverse installation of the device.

The assembly aid 44 is adapted to be received in the recess and retained therein by means of an interference fit. The interference fit provides sufficient gripping force to support the weight of the device when released by the user.

The user then secures the device to the vehicle by inserting threaded fasteners through the mounting holes 46 and twist-driving them into threaded engagement with the threaded bores in the vehicle underside.

Once the device is secured to the vehicle as described above, the user inserts the filter into the insertion aperture 60 in a direction of insertion shown by the arrow 62. More specifically, the narrower end of the filter is inserted into the insertion aperture 60, sliding past the latch portion of the retaining latch.

During insertion of the filter, the insertion guides 22 are arranged to contact the outer circumference of the main body of the filter. The insertion guides 22 serve four main functions: to centre the filter within the retaining band 20; to absorb dimensional tolerances in the filter caused by manufacturing tolerances; to provide an indication to the user as to the correct direction of insertion of the filter into the retaining device 10 and to reduce the insertion effort needed by the user to initiate the opening of the first arch-spring.

By providing three insertion guides 22 equiangularly spaced around the retaining band 20 the minimum number of contact points are provided to centre the filter. The body of the filter is supported at three points around its perimeter so if the filter is slightly larger in diameter or is off-round in comparison with the intended design condition, as may be caused by manufacturing tolerances, the "high-points" of the filter body will naturally fit between the insertion guides.

To aid the user to insert the filter into the retaining band 20 in the correct orientation (direction), the contact between the inserted end of the filter body and the leading edges of the insertion guides is staggered into two distinct stages. If the filter is inserted in the correct orientation into the filter insertion aperture 60, the insertion edge of the filter fits easily with little or no effort between four equidistantly spaced limit guides 28. The limit guides 28 extend from the retaining band 20 parallel with the direction of insertion 62. Once past the limit guides 28 the insertion edge of the filter then contacts two of the three insertion guides 22.

These first two insertion guides are referred to as first stage guides 22a. The leading edges of the first stage guides 22a contact the insertion edge of the filter body simultaneously if the user inserts the filter straight into the centre of the filter insertion aperture 60. If the user attempts to insert the filter at a slight angle to the direction of insertion 62 the reaction force from the first point of contact between the filter and the retaining band 20 will indicate to the user to straighten the filter to reduce the insertion force. If the user continues to push the filter into the retaining band 20 the contact between the filter and both first stage insertion guides 22a will guide the filter away from the less flexible half of the retaining band 20 adjacent to the fixing module 40 and strengthening web 52 and towards the more flexible half of the retaining band 20 which features the two arch-spring features 24.

The third insertion guide 22b provides the second stage insertion guide feature. The second stage insertion guide 22b is positioned equidistantly between the two arch-spring features 24. Once the insertion edge of the filter is pushed past the second stage insertion guide 22b the additional localized load on the relatively flexible half of the retaining band 20 causes the arch-spring features 24 to open slightly. The arch-spring features 24 are tuned to provide the same force between the insertion guides 22 and the filter body across the limits of dimensional tolerance expected from the filter manufacturer.

Once the filter body is pushed past the second stage insertion guide 22b the insertion force increases indicating to the user that the insertion is nearly complete and the insertion force should be increased. Continuing the insertion force will result in the filter body end cap of the filter contacting a retention latch 26. This is the final stage before the filter is fully installed.

As the user continues to slide the filter into the insertion aperture, the lip of the filter engages with the leading edge of the retention latch 26. The contact between the lip and the retention latch 26 results in a final increase in insertion force required to lift the retention latch over the raised lip. Continued insertion of the filter causes the latch portion of the retention latch 26 to be lifted over the lip and to spring down behind the trailing edge of the lip. This final movement of the retention latch causes an audible "snap" sound which indicates to the user that the filter has been correctly installed.

At the point where the retention latch snaps over the lip of the filter, the forward surface of the filter comes into abutment with the limit guides, thereby preventing further insertion. The leading edges of the limit-guides 28 are co-terminous so as to contact the end-cap lip simultaneously. In this position of maximum insertion, the lip is effectively clamped between the trailing edge 26b of the retention latch and the limit guides 28.

The steeper angle of the trailing edge ramp feature 26b prevents the filter from becoming loose due to vibration and requires the user to manually lift the retaining latch 26 over the end-cap lip with a finger prior to extraction of the filter from the retention device 10. No tools are required to extract or correctly insert a filter secured by the retaining device 10 of the present invention, this greatly reduces service time and effort.

The clamping pressure exerted by the retaining band 20 prevents rattling between the filter and the retaining device 10 in use.

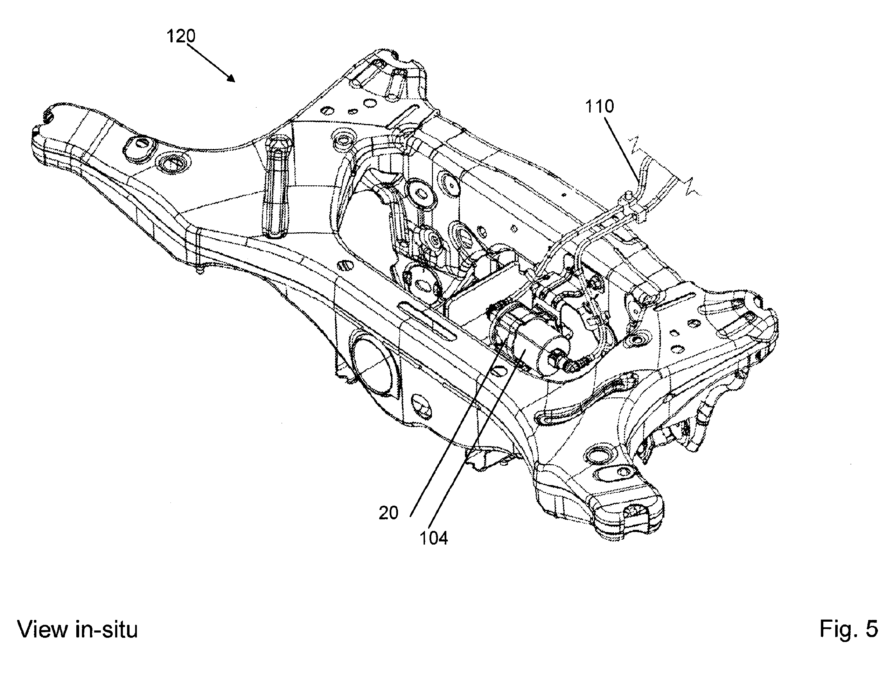

Figure 5 shows the retaining device 10, in-line fuel filter and associated fuel lines fitted to the rear suspension sub-frame of a motor vehicle.

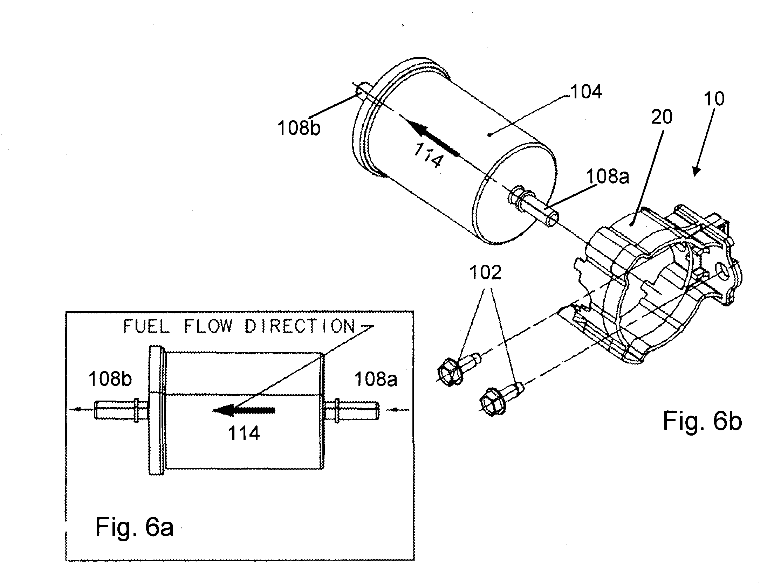

Figure 6a shows the in-line filter in greater detail. The in-line filter has a generally cylindrical main body 104, with a fuel port 108 at each end to which the user must connect fuel lines (shown in Figure 5), typically via 'Quick-fit' connectors. The direction of fluid flow through the filter is indicated by the arrow 114. In this case the fuel flows from fuel port 108a through the filter to fuel port 108b.

Figure 6b shows an exploded view of the retaining device 10 and the in-line filter prior to assembly to the vehicle. The filter has an end cap 106 at one end of the main body 104 distal from an insertion end 112.

During assembly of the in-line filter into the retaining band 20, the narrower insertion end 112 of the filter is inserted into the filter insertion aperture 60. The assembly operator pushes the filter into the insertion aperture 60 until the retention latch 26 closes behind the raised edge of the end cap 106. The retention latch produces a clearly audible "snap" sound as it closes behind the edge of the end cap 106, indicating to the assembly operator that the in-line filter has been correctly installed.

Correct orientation and installation of the in-line filter is important to ensure that the fluid flows through the filter in the intended direction of fluid flow, as indicated by the arrow 114. In-line filters are typically designed to filter a fluid flowing in a single direction only.

Also shown in Figure 6b are the threaded fasteners or bolts 102 used to secure the retaining device 10 to the vehicle.

It will be understood from the accompanying description that the present invention may be adapted to suit a wide variety of applications. It will be appreciated by one skilled in the art that number and relative position of the guides, arch spring and retaining latch features may be adjusted to suit the nature of the object to be retained. A larger filter will require additional strength in the retaining band and fixing module in order to preserve robustness in use. Use of threaded fasteners to secure the retaining device 10 to the vehicle or intermediate bracket may be replaced by clips, heat-staking, adhesive or riveting as required without departing from the scope of the present invention.

## Claims

1. An apparatus (10) for releasably securing an in-line filter (104) to a vehicle, the apparatus comprising a generally annular retaining band (20) defining an aperture (60) arranged to receive said in-line filter;
the retaining band (20) comprises insertion guides (22) arranged to guide insertion of the in-line filter (104) into the aperture (60), to grip the in-line filter, the retaining band (20) is formed from a single injection moulded part and is continuous around its circumference, and said insertion guides (22) are arranged to contact the outer circumference of the main body of the in-line filter(104);
**characterised in that**:
the retaining band has arch springs (24) comprising outwardly stepped portions of the retaining band, the arch springs arranged to expand radially outwardly so as to accommodate the filter and provide a substantially evenly distributed retention force to grip the filter.

2. An apparatus (10) as claimed in any preceding claim, wherein the retaining band (20) comprises at least three insertion guides (22) configured to centre the in-line filter (104) within the retaining band (20) of the retaining device (10).

3. An apparatus (10) as claimed in any preceding claim, wherein the contact between the in-line filter (104) and the leading edge of the insertion guides (22) is staggered so as to reduce insertion effort of the in-line filter (104) into the retaining device (10).

4. An apparatus (10) as claimed in any preceding claim, comprising fixing means for fixing the retaining band (20) to the vehicle, the fixing means (40) comprising mounting holes (46) having over moulded hole reinforcements (48) configured to prevent excessive compressive loading of the fixing module (40) by threaded fasteners (102) used to secure the apparatus (10) to the vehicle.

5. An apparatus (10) as claimed in claim 4, wherein the fixing means (40) is provided with an assembly aid (44) configured to prevent the user from incorrectly installing the apparatus (10).

6. An apparatus (10) as claimed in any preceding claim, comprising a retention latch (26) for releasably securing the in-line filter (104) within the aperture (60).

7. A vehicle having an apparatus (10) as claimed in any preceding claim.

## Patentansprüche

1. Vorrichtung (10) zum lösbaren Befestigen eines Leitungsfilters (104) an einem Fahrzeug, wobei die Vorrichtung ein im Allgemeinen ringförmiges Halteband (20) umfasst, das eine Öffnung (60) definiert, die dafür angeordnet ist, den Leitungsfilter aufzunehmen,
wobei das Halteband (20) Einsetzführungen (22) umfasst, die dafür angeordnet sind, das Einsetzen des Leitungsfilters (104) in die Öffnung (60) zu führen, um den Leitungsfilter zu erfassen, wobei das Halteband (20) aus einem einzelnen spritzgussgeformten Teil gebildet ist und an seiner Außenlinie durchgehend ist, und wobei die Einsetzführungen (22) dafür angeordnet sind, mit der Außenlinie des Hauptkörpers des Leitungsfilters (104) in Kontakt zu stehen,
**dadurch gekennzeichnet, dass**:
das Halteband Bogenfedern (24) aufweist, die auswärts gestufte Abschnitte des Haltebandes umfassen, wobei die Bogenfedern dafür angeordnet sind, sich derart radial auswärts zu dehnen, dass sie dem Filter Platz bieten und eine im Wesentlichen gleichmäßig verteilte Haltekraft bereitstellen, um den Filter zu erfassen.

2. Vorrichtung (10) nach einem der vorhergehenden Ansprüche, wobei das Halteband (20) mindestens drei Einsetzführungen (22) umfasst, die dafür gestaltet sind, den Leitungsfilter (104) im Halteband (20) der Haltevorrichtung (10) zu zentrieren.

3. Vorrichtung (10) nach einem der vorhergehenden Ansprüche, wobei der Kontakt zwischen dem Leitungsfilter (104) und der Vorderkante der Einsetzführungen (22) derart gestaffelt ist, dass der Aufwand des Einsetzens des Leitungsfilters (104) in die Haltevorrichtung (10) verringert ist.

4. Vorrichtung (10) nach einem der vorhergehenden Ansprüche, ein Befestigungsmittel umfassend, um das Halteband (20) am Fahrzeug zu befestigen, wobei das Befestigungsmittel (40) Montageöffnungen (46) umfasst, die angegossene Öffnungsverstärkungen (48) aufweisen, die dafür gestaltet sind, eine übermäßige Druckbelastung des Befestigungsmoduls (40) durch Befestigungselemente mit Gewinde (102) zu verhindern, die verwendet werden, um die Vorrichtung (10) am Fahrzeug zu befestigen.

5. Vorrichtung (10) nach Anspruch 4, wobei das Befestigungsmittel (40) mit einer Anordnungshilfe (44) versehen ist, die dafür gestaltet ist, einen nicht ordnungsgemäßen Einbau der Vorrichtung (10) durch den Benutzer zu verhindern.

6. Vorrichtung (10) nach einem der vorhergehenden Ansprüche, eine Haltezunge (26) zum lösbaren Befestigen des Leitungsfilters (104) in der Öffnung (60) umfassend.

7. Fahrzeug mit einer Vorrichtung (10) nach einem der vorhergehenden Ansprüche.

## Revendications

1. Appareil (10) de fixation amovible d'un filtre en ligne (104) sur un véhicule, l'appareil comprenant une bande de retenue généralement annulaire (20) définissant une ouverture (60) agencée pour recevoir ledit filtre en ligne ;
la bande de retenue (20) comprenant des guides d'insertion (22) agencés pour guider l'insertion du filtre en ligne (104) dans l'ouverture (60) pour agripper le filtre en ligne, la bande de retenue (20) étant formée à partir d'une pièce unique moulée par injection et étant continue autour de sa circonférence, et lesdits guides d'insertion (22) étant agencés pour faire contact avec la circonférence externe du corps principal du filtre en ligne (104) **caractérisé en ce que** :
la bande de retenue a des ressorts arqués (24) comprenant des parties échelonnées vers l'extérieur de la bande de retenue, les ressorts arqués étant agencés pour s'étendre radialement vers l'extérieur de manière à recevoir le filtre et fournir une force de retenue distribuée sensiblement uniformément pour agripper le filtre.

2. Appareil (10) selon l'une quelconque des revendications précédentes, dans lequel la bande de retenue (20) comprend au moins trois guides d'insertion (22) configurés pour centrer le filtre en ligne (104) dans la bande de retenue (20) du dispositif de retenue (10).

3. Appareil (10) selon l'une quelconque des revendications précédentes, dans lequel le contact entre le filtre en ligne (104) et le bord avant des guides d'insertion (22) est en quinconce de manière à réduire l'effort d'insertion du filtre en ligne (104) dans le dispositif de retenue (10).

4. Appareil (10) selon l'une quelconque des revendications précédentes, comprenant un moyen de fixation pour fixer la bande de retenue (20) sur le véhicule, le moyen de fixation (40) comprenant des trous de montage (46) ayant des renforcements de trou surmoulés (48) configurés pour empêcher une charge compressive excessive du module de fixation (40) par des fixations filetées (102) utilisées pour fixer l'appareil (10) au véhicule.

5. Appareil (10) selon la revendication 4, dans lequel le moyen de fixation (40) est fourni avec un aide à l'assemblage (44) configuré pour empêcher l'utilisateur d'installer incorrectement l'appareil (10).

6. Appareil (10) selon l'une quelconque des revendications précédentes, comprenant un verrou de retenue (26) pour fixer amoviblement le filtre en ligne (104) dans l'ouverture (60).

7. Véhicule ayant un appareil (10) selon l'une quelconque des revendications précédentes.
